# EUROPEAN PATENT APPLICATION

(11) **EP 3 608 019 A1**
(43) Date of publication of application: **12.02.2020**
(21) Application number: 19199176.9
(22) Date of filing: 03.06.2010
(51) Int. Cl.: B01J 29/08, B01J 37/30, C08J 11/10, C10G 1/00

(54) **MODIFIED ZEOLITES AND THEIR USE IN THE RECYCLING OF PLASTICS WASTE**

(30) Priority: 03.06.2009 GB 0909527
(62) Divisional of application: 10724562.3
(71) Applicant: University of Manchester, Manchester M13 9PL (GB)
(72) Inventor: GARFORTH, Arthur, Stockport, Manchester SK4 1NN (GB); HERNANDEZ-MARTINEZ, Jesus, NL-6221EH Maastricht (NL); AKAH, Aaron, Manchester, M40 3LU (GB); COOKE, Michael, Widnes, WA8 8XS (GB); CRESSWELL, David, Christleton, Chester CH3 7AS (GB)
(74) Representative: HGF Limited

(57) **Abstract**

The present invention relates to a method for the recycling of plastics materials, in particular waste plastics materials, into chemical feed stocks and hydrocarbon fractions. The present invention also relates to novel zeolite based catalysts used in such methods. The present invention also relates to methods of manufacturing such zeolite based catalysts.

Plastics waste is traditionally disposed of by land-fill, incineration or recycling by reprocessing the waste into raw material for reuse. Each of these disposal methods has its disadvantages. The drawbacks of land-fill are self apparent. Although incineration may include energy recovery, there still remains the obvious problem of CO₂ emission and the emission of other toxic pollutants. Additionally, recycling the plastics requires sorting of the plastics waste because certain types of plastics materials are not recyclable, and mixtures of plastics can be problematic.

The present invention provides an improved method for the recycling of waste plastics including mixed waste streams.

## Description

The present invention relates to a method for the recycling of plastics materials, in particular waste plastics materials, into chemical feed stocks and hydrocarbon fractions. The present invention also relates to novel zeolite based catalysts used in such methods. The present invention also relates to methods of manufacturing such zeolite based catalysts.

Plastics waste is traditionally disposed of by land-fill, incineration or recycling by reprocessing the waste into raw material for reuse. Each of these disposal methods has its disadvantages. The drawbacks of land-fill are self apparent. Although incineration may include energy recovery, there still remains the obvious problem of CO₂ emission and the emission of other toxic pollutants. Additionally, the temperatures required for incineration are high, typically of the order of 400 to 1200°C.

Recycling the plastics requires sorting of the plastics waste because certain types of plastics materials are not recyclable, and mixtures of plastics can be problematic. For example, when different types of plastics are melted together they tend to phase-separate and set into layers. These phase boundaries can cause structural weakness in the resulting material and therefore limit the applications of the resulting material.

Thus there is a need for an improved method for the recycling of waste plastics. Alternative solutions are catalytic hydrocracking and catalytic and non-catalytic pyrolysis.

The use of zeolite based catalysts in the hydrocracking and pyrolysis of gasoline feed stocks into gasoline is known in the petrochemical industry. Furthermore, the use of zeolite based catalysts in the recycling of waste plastics into desirable fuels such as gasoline, diesel fuel and liquefied petroleum gas (LPG) has been considered as a possible recycling method; thermal and catalytic cracking have both been considered. Hydrocracking catalysts typically consist of a metal (hydrogenation function) supported over an acidic support (cracking function). The most used metal functions are noble metals as Pt, Pd and Ni, or bimetallic sulphides such as Co/MoS or Ni/MoS with the usual acidic supports being alumina, amorphous silica alumina (ASA) and zeolites. The balance between the acidic and metal function is critical in the performance of the catalyst. However, it is not possible to determine the optimum balance *ab initio.* One problem with this approach is that conventional zeolite catalysts have a limited lifetime and become "spent" after a period of use. The spent catalysts are less active and this is considered to be a consequence of their reduced crystallinity relative to fresh catalysts.

Hydrocracking and pyrolysis of waste plastics have numerous drawbacks, and therefore are not presently considered to be viable methods for the disposal of waste plastics. The main problems encountered with these techniques are the high temperatures required (400 to 700° C), the long reaction times required and the variability of the quality of the product. There are also significant problems caused by the presence of polyvinyl halides (such as PVC) and PET in the waste plastics supply. The rapid dehalogenation of polyvinyl halides has dramatic consequences on a conventional pyrolysis and catalytic unit because of the production of halogenated organics and hydrogen halides. Additionally, the thermal degradation of PET produces large amounts of oligomers and terephthalic acid, which can cause damage to conventional reactors. Consequently, it is essential to pre-sort the waste stream before recycling it to remove these undesirable components. These various problems prevent continuous operation of the reactor. Conventionally, mixed waste plastics supplies must therefore first be separated to remove plastics such as PVC, e.g. by mechanical means, which in itself is a costly and time consuming process. This problem is exacerbated by the presence of PVC films on some products such as drinks bottles which makes the separation of PVC extremely difficult. Furthermore, the problem of how to dispose of plastics such as PVC still remains. An additional problem with the processing of mixed waste plastics is the variation in the resulting product streams; different waste plastics produce different product streams.

The processing of mixtures of waste plastics materials is therefore considered to be extremely problematic and, as such, catalytic hydrocracking and pyrolysis are not considered to be viable methods of disposing of plastics waste which has not been pre-sorted.

It is known that the performance of zeolite based catalysts may be improved by increasing the stability of the zeolite and by reducing the unit cell size dimension and sodium oxide (Na₂O) content of the zeolite. It is therefore an objective when providing improved zeolite based catalysts to reduce the unit cell size and Na₂O content from that of the originally synthesised zeolite catalyst to as low a value as possible. There have been several disclosures which describe the reduction of the unit cell size and Na₂O content of zeolite based catalysts. However, if this process of reducing the unit cell size and/or Na₂O content of the zeolite is performed to too great an extent, the catalyst may be deactivated. In other words, the modified catalyst may resemble a spent catalyst and/or become ineffective or have a reduced lifetime. For this reason, catalysts are treated carefully to ensure that the modification of the crystallinity, unit cell size and Na₂O content only proceeds to a limited extent.

For example, GB 2 014 970 discloses modified forms of zeolite Y which exhibit an adsorptive preference for less polar organic molecules relative to strongly polar molecules such as water. The authors of GB 2 014 970 termed these modified forms of zeolite Y 'ultrahydrophobic type Y zeolites' or 'UHP-Y zeolites'. The zeolites are first ion-exchanged and are then subjected to a steam calcination step. Briefly, the ion-exchange method comprises steam calcining zeolite Y at between 550 and 800°C for 0.25 hr; rapidly cooling to 350°C; and performing a conventional cation exchange with an ammonium salt. The ion-exchanged zeolites are disclosed to have a Na₂O content of approximately 0.25%. The ion-exchanged zeolites then undergo a further limited steam calcination process. The resulting UHP-Y zeolites are disclosed to have a unit cell dimension of 24.20 - 24.45 Å. These modified zeolites are then used as catalysts without further treatment.

GB patent 2 085 861 discloses a process for preparing an aluminium ion exchanged type Y zeolite-containing catalyst which produces high octane cracked gasoline. The process disclosed comprises: performing an ammonium ion exchange, then subjecting the zeolite to calcination at 537 - 815°C and performing an aluminium ion exchange. This process reduces both the Na₂O content and also the unit cell size of the zeolite; unit cell size values of 24.45Å are disclosed. It is also disclosed that the aluminium ion exchanged zeolite may be subjected to a further ammonium ion exchange to further reduce the Na₂O content. The aluminium ion exchange in this process replaces most of the sodium ions present in the calcined zeolite with aluminium ions.

US patent 5,059,567 also discloses a process for preparing a modified zeolite Y having increased stability and a small zeolite unit cell size; unit cell size values of 24.20Å are disclosed. The process disclosed in this document increases the stability of the zeolite and decreases the stability of the zeolite by the following process: first performing an initial ammonium ion exchange, then subjecting the zeolite to steam calcination at 500 - 900°C, optionally performing a further ammonium ion exchange, then performing an aluminium ion exchange before subjecting the zeolite to a final steam calcination at 500 - 900°C. The resulting catalyst is then used without further treatment. Importantly, it is disclosed in US patent 5,059,567 that the final unit cell size after the aluminium ion exchange and the subsequent calcination in steam was dependent on the amount of aluminium ions supplied by ion exchange. The greater the amount of aluminium ions supplied by ion exchange, the greater was the reduction of the unit cell size with unchanged calcination conditions. It is also disclosed in US patent 5,059,567 that the performance of the optional ammonium ion exchange step does not have an effect the unit cell size.

Accordingly, the present invention aims to provide an improved method for the disposal of waste plastics. The present invention also aims to provide a method for the disposal of mixed waste plastics, i.e. waste plastics having two or more types of plastics. It is therefore an aim to provide a method and system for extracting usable hydrocarbon fuel products from plastic waste without any need for a sorting process.

The present invention also aims to provide a method for the disposal of waste plastics which is tolerant to plastics such as halogenated polyvinyls (e.g. PVC) and 'acidic' polymers (e.g. PET). The present invention also aims to provide a method for the disposal of mixed waste plastics which include PVC or PET as a component of the mixture. It is therefore an aim of the present invention to provide a method and system for extracting usable hydrocarbon fuel products from plastic waste which is tolerant to the presence of polyvinyl halides and/or PET and/or other conventionally undesirable contaminants.

The present invention also aims to provide a method of catalytically hydrocracking waste plastics. The present invention also aims to provide a method of catalytically pyrolising waste plastics. The present invention also aims to provide a method of hydrocracking or pyrolising waste plastics to a product stream comprising a distribution of lower alkyl and/or lower alkenyl compounds. The present invention also aims to provide a method of hydrocracking or pyrolising waste plastics which utilises milder reaction conditions, such as a lower reaction temperature, a lower reaction pressure and/or for shorter reaction times than conventional processes. It is thus an aim to provide an economic and robust process that is widely applicable.

The present invention also aims to provide a method recycling spent zeolite catalysts that are otherwise useless.

The present invention also aims to provide novel zeolite based catalysts and methods for providing the same. The present invention satisfies at least one or more of the above aims.

The modified zeolite catalysts of the present invention are obtained from existing zeolite catalysts by a process that includes steps which ordinarily might be considered as leading to deactivation of the zeolite catalyst. In this regard the catalysts would normally be considered to be "spent" and incapable of further use.

According to a first aspect, the present invention provides a method of making a modified zeolite catalyst comprising:
(i) obtaining a commercially available zeolite Y catalyst having a Na₂O content of from 2.0 to 4.0%;
(ii) optionally subjecting the zeolite to an ion-exchange process, wherein the ion-exchange process comprises admixing the zeolite with an ammonium salt solution at between 50 and 85°C for between 10 and 60 minutes;
(iii) subjecting the zeolite of step (i) or step (ii) to an ion-exchange process, wherein the ion-exchange process comprises admixing the zeolite with an ammonium salt solution at between 60 and 100°C for between 60 and 240 minutes;
(iv) steam calcining the zeolite from step (iii) at between 450 and 800°C for between 10 minutes and 60 minutes;
(v) subjecting the zeolite of step (iv) to an ion-exchange process, wherein the ion-exchange process comprises admixing the zeolite of step (iv) with an ammonium salt solution at between 50 and 95°C for between 10 and 120 minutes; and
(vi) optionally subjecting the zeolite of step (v) to an ion-exchange process, wherein the ion-exchange process comprises admixing the zeolite of step (v) with a transition metal salt solution.

According to another aspect, the present invention provides a zeolite catalyst comprising: a zeolite having a sodium oxide content of 0.1% or less; and optionally comprising a transition metal.

In an embodiment, the zeolite of the present invention has a final unit cell dimension of 24.3 - 24.7 Å. In an embodiment, the zeolite of the present invention has a Si/AI ratio of 1.5 - 3. In an embodiment, the zeolite of the present invention has a surface area of 400 - 900 m²g⁻¹, preferably 650 - 850 m²g⁻¹. In an embodiment, the zeolite of the present invention has a crystallinity of 60 - 100%, preferably 70 - 90%. In an embodiment, the zeolite of the present invention has a Na₂O content of 0.05 - 0.6%, preferably 0.05 - 0.35% by weight of the dried bulk.

The following table provides typical values of samples of the zeolite of the present invention:

| Sample | Na₂O content/% (Dried Bulk) | Unit cell size/Å | Crystallinity/% | Surface area/m²g⁻¹ |
|---|---|---|---|---|
| A | 0.32 | 24.54 | 83 | 798 |
| B | 0.10 | 24.52 | 80 | 780 |
| C | 0.10 | 24.53 | 83 | 772 |
| D | 0.07 | 24.45 | 70 | 729 |
| E | 0.07 | 24.39 | 70 | 681 |

According to another aspect, the present invention provides a method of recycling a waste plastics material, comprising:
(i) introducing into a reactor a waste plastics supply and a zeolite catalyst as defined in the above aspect;
(ii) optionally introducing a solvent into a reactor;
(iii) optionally purging the reactor with an inert gas;
(iv) introducing an inert gas into the reactor, or alternatively introducing hydrogen gas into the reactor, wherein the pressure of inert gas or hydrogen gas is between 1 atm and 100 atm;
(v) optionally providing a mixing means for mixing the waste plastics supply and the catalyst;
(vi) heating the reactor to between 150°C and 500°C for between 1 minute and 4 hours.

The zeolite catalyst is a modified zeolite catalyst and is prepared in accordance with the invention as described above.

In an embodiment, the commercially available zeolite Y of step (i) of the method of making the zeolite catalyst has a Na₂O concentration of 2.0 to 3.5%, preferably 2.0 to 3.0% and more preferably around 2.5% (% of dried bulk).

In an embodiment, the ammonium salt solution is an aqueous solution of an ammonium salt for any one or all of step (ii), step (iii) and step (v). In an embodiment, the ammonium salt when used to ion-exchange the zeolite catalyst is independently selected from the group comprising: ammonium chloride, ammonium sulphate and ammonium nitrate. The skilled person will be aware of other ammonium salts that would be suitable in the method of the present invention. The ammonium salt used in step (ii), step (iii) and step (v) may be the same or different. Preferably, step (ii), step (iii) and step (v) use the same ammonium salt.

In an embodiment, step (ii) of the method of making a zeolite catalyst is mandatory. In general terms, step (ii) of the method of making a zeolite catalyst is a mild ammonium ion exchange. The skilled person would understand what is meant by the term 'mild ammonium ion exchange' and be able to determine suitable reaction conditions. Accordingly, the method of the invention is not intended to be limited to the following embodiments. In an embodiment, step (ii) of the method of making a zeolite catalyst comprises subjecting the zeolite to an ion-exchange process, wherein the ion-exchange process comprises admixing the zeolite with an ammonium salt solution at between 55 and 80°C, preferably 60 and 75°C and more preferably 65 and 70°C. In an embodiment, the ion-exchange process comprises admixing the zeolite with an ammonium salt solution at around 70°C.

In an embodiment, step (ii) of the method of making a zeolite catalyst comprises subjecting the zeolite to an ion-exchange process, wherein the ion-exchange process comprises admixing the zeolite with an ammonium salt solution for between 15 minutes and 50 minutes, preferably 20 minutes and 45 minutes, more preferably 25 minutes and 40 minutes and yet more preferably 30 minutes and 35 minutes. In an embodiment, the ion-exchange process comprises admixing the zeolite with an ammonium salt solution for 30 minutes.

In general terms, step (iii) of the method of making a zeolite catalyst is a severe ammonium ion exchange. The skilled person would understand what is meant by the term 'severe ammonium ion exchange' and be able to determine suitable reaction conditions. Accordingly, the method of the invention is not intended to be limited to the following embodiments. In an embodiment, step (iii) of the method of making a zeolite catalyst comprises subjecting the zeolite to an ion-exchange process, wherein the ion-exchange process comprises admixing the zeolite with an ammonium salt solution at between 70 and 100°C, preferably 80 and 100°C and more preferably 90 and 100°C. In an embodiment, the ion-exchange process comprises admixing the zeolite with an ammonium salt solution at around 95°C ± 2°C.

In an embodiment, step (iii) of the method of making a zeolite catalyst comprises subjecting the zeolite to an ion-exchange process, wherein the ion-exchange process comprises admixing the zeolite with an ammonium salt solution for between 1.5 hours and 4 hours, preferably 2 hours and 3.5 hours and more preferably 2.5 hours and 3.5 hours. In an embodiment, step (iii) comprises subjecting the zeolite to an ion-exchange process, wherein the ion-exchange process comprises admixing the zeolite with an ammonium salt solution for around 3 hours.

In an embodiment, step (ii) of the method of making a zeolite catalyst is omitted and step (iii) follows step (i). In this case, the mild ion exchange in embraced within the severe ion exchange of step (iii).

In an embodiment, step (iv) of the method of making a zeolite catalyst comprises steam calcining the zeolite from step (iii) at between 450 and 600°C, preferably 470 and 570°C and more preferably 500 and 540°C. In an embodiment, step (iv) comprises calcining the zeolite from step (iii) at 520°C.

In an embodiment, step (iv) of the method of making a zeolite catalyst comprises steam calcining the zeolite from step (iii) at between 500 and 700°C, preferably 550 and 650°C and more preferably 580 and 620°C. In an embodiment, step (iv) comprises calcining the zeolite from step (iii) at 600°C.

In an embodiment, step (iv) of the method of making a zeolite catalyst comprises steam calcining the zeolite from step (iii) at between 600 and 800°C, preferably 650 and 750°C and more preferably 680 and 730°C. In an embodiment, step (iv) comprises calcining the zeolite from step (iii) at 710°C.

In an embodiment, step (iv) of the method of making a zeolite catalyst comprises steam calcining the zeolite from step (iii) for between 15 minutes and 50 minutes, preferably 20 minutes and 45 minutes, more preferably 25 minutes and 40 minutes and yet more preferably 30 minutes and 35 minutes. In an embodiment, step (iv) of the method comprises steam calcining the zeolite from step (iii) for 30 minutes.

In an embodiment, step (v) of the method of making a zeolite catalyst comprises subjecting the zeolite to an ion-exchange process, wherein the ion-exchange process comprises admixing the zeolite with an ammonium salt solution at between 60 and 95°C, preferably 65 and 90°C and more preferably 70 and 90°C. In an embodiment, step (v) comprises subjecting the zeolite to an ion-exchange process, wherein the ion-exchange process comprises admixing the zeolite with an ammonium salt solution at around 80°C ± 2°C.

In an embodiment, step (v) of the method of making a zeolite catalyst comprises subjecting the zeolite to an ion-exchange process, wherein the ion-exchange process comprises admixing the zeolite with an ammonium salt solution for between 20 minutes and 90 minutes, preferably 30 minutes and 90 minutes and more preferably 45 minutes and 75. In an embodiment, step (v) of the method comprises subjecting the zeolite to an ion-exchange process, wherein the ion-exchange process comprises admixing the zeolite with an ammonium salt solution for around 1 hour.

In an embodiment, step (iv) of the method of making a zeolite catalyst is omitted. In this embodiment, the method of making a zeolite catalyst provides a catalyst suitable for pyrolysis reactions as mentioned above.

In an alternative embodiment, step (vi) of the method of making a zeolite catalyst is mandatory. In this embodiment, the method of making a zeolite catalyst provides a catalyst suitable for hydrocracking reactions as mentioned above. In an embodiment, step (vi) comprises treating the zeolite of step (v) with a solution of a transition metal salt. In an embodiment step (vi) comprising stirring the zeolite from step (v) in a solution of transition metal salt at around room temperature for between 1 hour and 48 hours, preferably 24 hours.

In an embodiment, the zeolite is produced by first reducing the Na₂O level by performing a mild ion-exchange process, followed by a more severe ion-exchange process and then performing a steam calcination step. The final level of Na₂O can be tuned according to the severity of the final steam calcination step; the more severe the calcination, the lower the Na₂O content. Finally, the steam calcined zeolite is further ion-exchanged.

By way of example, the zeolite may be prepared by the following method:
(i) provide a zeolite catalyst having a Na₂O content of approximately 2.5%;
(ii) perform a mild ammonium ion-exchange (pH 8, 70°C, 30 mins). The resulting zeolite has a Na₂O content of approximately 0.57%;
(iii) perform severe ammonium ion-exchange (pH 8, 95°C, 3 hrs). The resulting zeolite has a Na₂O content of approximately 0.1%;
(iv) perform a steam calcination step: mild (520°C, 30 mins), medium (600°C, 30 mins), severe (710°C, 30 mins). The resulting zeolites have a Na₂O content of 0.1%, 0.07% and 0.07% respectively;
(v) perform a further ammonium ion-exchange (pH 8, 80°C, 1 hr). The resulting zeolite has a Na₂O content of approximately 0.1%, 0.07% and 0.07% respectively.

In an embodiment, the zeolite is produced by the method recited in the first aspect above. In an embodiment the zeolite is characterised per the preferred embodiments recited above.

In an embodiment, the term 'reactor' includes a 300 mL stainless steel autoclave. Pressures are measured on a pressure gauge with an accuracy of ±20 psi.

The term 'recycling' includes both hydrocracking and pyrolysis of the plastics materials.

The term 'waste plastics supply' embraces both virgin plastics materials, such as scrap generated during processing of the plastics into the desired article, and also the waste material (i.e. the end material which remains after the plastics product has performed its desired function). Thus the waste plastic supply may be the waste material which has originated from a domestic or commercial source, e.g. a residential or factory waste bin, or that found in a land-fill site.

In an embodiment, the waste plastics supply comprises a single waste plastics material, such as polyethylene (PE), polypropylene (PP), polystyrene (PS), polyethylene terephthalate (PET), polychloroprene, nylon, polyvinyl chloride (PVC), polyacrylonitrile (PAN), or polyurethane (PU). It is intended that the above listed plastics materials embrace all forms of the plastics e.g. both high and low density plastics and linear and branched forms. More advantageously, the waste plastics supply is a mixture of different plastics as described below. Preferably, when the waste plastics supply comprises a single waste plastics material, the material is selected from the group comprising: polyethylene (PE), polypropylene (PP), polystyrene (PS) and polyethylene terephthalate (PET).

In another embodiment, the waste plastics supply comprises a mixture of two or more waste plastics materials as described above. In a preferred embodiment, the waste plastics supply comprises a mixture of two or more members selected from the group comprising: polyethylene (PE), polypropylene (PP), polystyrene (PS), polyethylene terephthalate (PET) and polyvinyl chloride (PVC). For example, the mixture of two or more waste plastics materials may be a mixture of: PP, PE and PS; PP, PE, PS and PET; PE, PS and PET; PP, PS and PET; PE, PS and PVC; or PP, PS and PVC.

Each component of the mixture of waste plastics may be present in a wide range of proportions relative to the other components of the mixture. For example, the mixture may contain 80% PE, 10% PS and 10% PET. Adjusting the proportions of each component of the mixture provides a useful method of tuning the product distribution. This is illustrated in Example 7. For example, increasing the proportion of polystyrene in a plastics mixture increases the rate of reaction and shifts the product stream to predominantly gaseous products for a given temperature.

In an embodiment, the modified zeolite catalyst of the invention is a metal loaded zeolite catalyst and comprises a catalytic metal. The zeolite catalyst is first modified by the ion exchange and calcining processes described above and then loaded with a catalytic metal in a subsequent step. The catalyst is loaded with a metal by treatment with, for example, an aqueous solution of the metal salt. In such a case, the metal of the metal loaded catalyst is able to catalyse the hydrocracking of a waste plastics supply in the presence of hydrogen gas. In this case, the zeolite acts as a support for the metal.

In another embodiment, the zeolite catalyst is does not comprise a catalytic metal. In such a case, the zeolite of the catalyst is able to catalyse the pyrolysis of a waste plastics supply under an inert gas.

Preferably the zeolite catalyst is a metal loaded zeolite catalyst and comprises a catalytic metal. In this case, the metal catalyses the hydrocracking of a waste plastics supply in the presence of hydrogen gas.

In an embodiment, the catalytic metal of the zeolite catalyst is a group Vlllb transition metal, i.e. a transition metal selected from the group comprising: Fe, Ru, Os, Co, Rh, Ir, Ni, Pd and Pt. The transition metal catalyst is preferably selected from the group comprising: platinum, palladium, nickel and iridium. More preferably, the transition metal is selected from the group comprising: platinum and nickel; most preferably the metal is platinum.

The quantity of metal catalyst in relation to the zeolite can vary considerably. For example, the zeolite catalyst may comprise from 0.1% to 75% transition metal catalyst by weight. This figure of course depends on which transition metal catalyst is selected. For example, if the transition metal catalyst is a platinum catalyst, the amount of catalyst may be between 0.1 and 10%, and more normally is between 0.1 and 5%, preferably 1% ± 0.2%, by weight of the zeolite catalyst. Alternatively, if the transition metal catalyst is a nickel catalyst, the amount of catalyst may be between 10 and 75%, preferably 60% ± 2%, by weight of the zeolite catalyst.

In an embodiment, the zeolite has a Na₂O content of less than 0.15%, preferably 0.1% or less, ± 0.01%. The reduction in Na₂O content means that the zeolite also has a concomitant reduction in unit cell size. Thus ammonium ion exchange and calcination each independently reduce both the unit cell size and the Na₂O content. The balance of Al³⁺ in the framework versus extra framework Al³⁺ is important in controlling the overall acidity of the catalyst. The balance of this is manipulated here by using various steaming regimes.

It is possible that other known low Na₂O content zeolites may also have application in the present invention. The invention thus extends to the use of such zeolites.

In an embodiment, the zeolite catalyst employed in the present invention comprises a modified zeolite, in which the zeolite has been ion-exchanged and calcined and is used as a support for a catalytic metal. However, catalyst supports other than zeolites may also be used in the present invention. In general terms, other suitable supports would include divided solids comprising a metal oxide or a mixture of metal oxides such as, for example, silica/alumina, silica, alumina, mesoporous oxides and natural clays.

In an embodiment, a solvent is employed in the method of the invention. This is introduced in step (ii) into the reactor. The purpose of the solvent is to improve the interaction of the catalyst with the waste plastics supply. The solvent may be a single solvent or may be a mixture of suitable solvents. In an embodiment, the solvent is a liquid alkane solvent, such as a C₅-C₁₂ alkane solvent, e.g. a C₅, C₆, C₇, C₈, C₉, C₁₀, C₁₁ or C₁₂ alkane or a mixture of more than one of these, or a mixture of isomers of these. In an embodiment, the solvent is a longer chain liquid alkane solvent. The term 'longer chain alkane solvent' is intended to cover alkane solvents having over 10 carbon atoms. Preferred solvents include n-heptane and n-decane, but other solvents may be employed. Another preferred solvent is squalane.

In an embodiment, the waste plastics supply and zeolite catalyst are first introduced into the reactor. The waste plastics and catalyst may be mixed prior to introduction into the reactor or may be introduced separately. The waste plastics may be processed prior to introduction into the reactor. For example the plastics may be washed, chopped, shredded and/or powdered prior to being introduced into the reactor. If there is a mixture of plastics, sorting of the different plastics is not necessary, but may be performed.

After introduction of the waste plastics, catalyst and any necessary solvent, the reactor is then sealed. Typically, the reactor is sealed by the provision of a lid reactor and gasket. In order to aid the seal, copper grease can be applied to the gasket and the lid can be fixed to the reactor by bolts or other suitable fixing means.

The reactor may optionally be equipped with a rotating stirrer. Although not necessary, a stirrer would provide for better mixing of the plastics waste and catalyst. The reaction might work to some extent without mixing. The skilled person would realise that other forms of agitation would also enable the plastics waste and catalyst to be mixed.

The reactor may be purged with an inert gas prior to starting the reaction. Purging with inert gas removes any oxygen from the system which prevents oxidation of the plastics waste and, if hydrogen gas is used, prevents the risk of explosion. The reactor may be purged once, twice or even three times prior to starting the reaction.

Thus the reactor may be purged by systematic purging (i.e. filling the reactor with inert gas and emptying the reactor several times). Alternatively, the reactor may be purged by flushing with inert gas prior to sealing the reactor. Although purging of the reaction is recommended, it is not an essential step of the invention.

The term 'inert gases' is intended to include gases such as nitrogen, the noble gases e.g. argon and krypton, and halogenated hydrocarbon gases. Alternatively, any gas can be used to remove oxygen from the reactor may be used.

In an embodiment, the reaction is carried out in the presence of hydrogen gas. In this embodiment, it is advisable, although not essential that the reactor be purged of oxygen before introduction of the hydrogen gas. The reaction can be performed at as low as atmospheric pressure. In an embodiment, the reactor is pressurised with hydrogen gas to between 3 bar and 100 bar. In a preferred embodiment, the reactor is pressurised with hydrogen gas to between 20 and 75 bar. In a preferred embodiment, the reactor is pressurised with hydrogen gas to between 35 and 60 bar. If the reaction is carried out in the presence of hydrogen gas, the waste plastics supply will undergo a hydrocracking reaction (as opposed to a pyrolysis reaction). The resulting reaction products from such a reaction will be hydrogenated products.

In an alternative embodiment, the reaction is carried out in the presence of an inert gas. In an embodiment, the inert gas is nitrogen or argon, preferably nitrogen. The reaction can be performed at as low as atmospheric pressure. In an embodiment, the reactor is pressurised with nitrogen gas to between 3 bar and 100 bar. In a preferred embodiment, the reactor is pressurised with nitrogen gas to between 20 and 75 bar. In a preferred embodiment, the reactor is pressurised with nitrogen gas to between 35 and 60 bar. If the reaction is carried out in the absence of hydrogen gas (i.e. under inert gas conditions), the waste plastics supply will undergo a pyrolysis reaction. The resulting reaction products from such a reaction will be both saturated and unsaturated products.

In an embodiment, the reaction is performed at between 250°C and 500°C. Preferably the reaction is performed between 240 and 450°C. More preferably the reaction is performed between 240 and 400°C. For example, the reaction may be performed at 240°C, 250°C, 260°C, 270°C, 280°C, 290°C, 300°C, 310°C, 320°C, 330°C, 340°C, 350°C, 360°C, 370°C, 380°C, 390°C, 400°C, 410°C, 420°C, 430°C, 440°C or 450°C. Yet more preferably, the reaction is performed between 300 and 370°C. In an embodiment, the reaction is performed at around 300°C, e.g. between 280 and 300°C. In an embodiment, the reaction is performed at around 350°C, e.g. between 330 and 370°C. In an embodiment, the reaction is performed at around 400°C, between 380°C and 420°C.

In an embodiment, the reaction is heated for between 1 minute and 3 hours. Preferably, the reaction is heated for between 1 minute and 30 minutes. Typically the reaction can be completed in 15 minutes or less, or even in as short a time as 10 minutes or less. One important feature of the present invention is that the reactions can be performed in a relatively short period of time.

In an embodiment, the reaction is a batch reaction and the reaction is cooled to room temperature after heating for the above period of time. In an alternative embodiment, the reaction is a continuous reaction and the reaction is not cooled after heating. Instead, a new waste plastics supply is introduced into the reactor and the reactor is re-pressurised as necessary with hydrogen or inert gas. This step can be repeated a number of times, as required, before final cooling of the reactor and termination of the reaction.

As mentioned above, in an embodiment the zeolite catalyst is a metal loaded zeolite catalyst. In other words, the zeolite catalyst comprises a catalytic metal. In another embodiment, the zeolite catalyst does not comprise a catalytic metal.

It is known in the art that steam calcination can be used to deliberately deactivate zeolite catalysts. Thus, the zeolite catalysts resulting from the final steam calcination are similar in structure and properties to spent zeolite catalysts. However, it has surprisingly been found that by performing an additional ammonium ion exchange step, an extremely useful zeolite catalyst can be produced from waste i.e. spent catalysts: a catalyst of the present invention. Furthermore, a yet further surprising discovery is that by ion exchanging this ammonium ion exchanged catalyst with a target catalytic metal ion, an extremely useful metal loaded zeolite catalyst can be obtained.

Figure 1 illustrates an example of an autoclave setup. The following key is used:
- V-N: = N₂ line valve
- V-H: = H₂ line valve
- V-G: = Autoclave gas valve
- V-V: = Venting valve
- V-S: = Sampling valve
- V-OW: = One way valve
- SC: = Gas sampling connection
- RD: = Bursting disc
- PI: = Pressure Gauge
- TCI: = Temperature controller and indicator

Figure 2 illustrates an example of the catalyst activation rig used in the present invention. The following key is used:
- VM-N: = Nitrogen metering valve
- VM-H: = Hydrogen metering valve
- VM-A: = Air metering valve
- V-1: = Valve 1
- V-2: = Valve 2
- V-3: = Valve 3
- V-4: = Valve 4
- C-1: = Connection 1
- C-2: = Connection 2
- C-3: = Connection 3
- V-OW: = One way valve
- TCI: = Temperature controller and indicator
- Tl: = Thermocouple

The invention will now be described with reference to the following numbered clauses:
1. A method of making a modified zeolite catalyst, the method comprising:
   (i) obtaining a commercially available zeolite Y catalyst having a Na₂O content of from 2.0 to 4.0%;
   (ii) optionally subjecting the zeolite to an ion-exchange process, wherein the ion-exchange process comprises admixing the zeolite with an ammonium salt solution at between 50 and 85°C for between 10 and 60 minutes;
   (iii) subjecting the zeolite of step (i) or step (ii) to an ion-exchange process, wherein the ion-exchange process comprises admixing the zeolite with an ammonium salt solution at between 60 and 100°C for between 60 and 240 minutes;
   (iv) steam calcining the zeolite from step (iii) at between 450 and 800°C for between 10 minutes and 60 minutes;
   (v) subjecting the zeolite of step (iv) to an ion-exchange process, wherein the ion-exchange process comprises admixing the zeolite of step (iv) with an ammonium salt solution at between 50 and 95°C for between 10 and 120 minutes; and
   (vi) optionally subjecting the zeolite of step (v) to an ion-exchange process, wherein the ion-exchange process comprises admixing the zeolite of step (v) with a transition metal salt solution.
2. A method as described in clause 1, wherein in step (i) of the method the zeolite catalyst has a Na₂O concentration of 2.0 to 3.0%.
3. A method as described in clause 1 or 2, wherein the ammonium salt solution is an aqueous solution of an ammonium salt selected from the group comprising: ammonium chloride, ammonium sulphate and ammonium nitrate.
4. A method as described in clause 1, 2 or 3, wherein step (ii) of the method of making a zeolite catalyst is mandatory.
5. A method as described in any of clauses 1, 2, 3 or 4, wherein step (iv) of the method of making a zeolite catalyst comprises steam calcining the zeolite from step (iii) at between 450 and 600°C.
6. A method as described in any of clauses 1 to 5, wherein the modified zeolite catalyst is a metal loaded zeolite catalyst and wherein the transition metal is selected from the groups comprising: Fe, Ru, Os, Co, Rh, Ir, Ni, Pd and Pt.
7. A modified zeolite catalyst comprising: a zeolite having a sodium oxide content of 0.1% or less; and optionally comprising a transition metal in an amount of 0.1% to 75% by weight.
8. A catalyst as described in clause 7, wherein the modified zeolite has a final unit cell dimension of 24.3 to 24.7 Å.
9. A catalyst as described in clause 7 or 8, wherein the zeolite has a Si/AI ratio of 1.5 to 3.
10. A catalyst as described in any of clauses 7, 8 or 9, wherein the zeolite has a surface area of 400 to 900 m²g⁻¹.
11. A catalyst as described in any of clauses 7, 8, 9 or 10, wherein the zeolite has a crystallinity of 60 to 100%.
12. A catalyst as described in any of clauses 7 to 11, wherein the zeolite has a Na₂O content of 0.05 to 0.6% by weight of the dried bulk.
13. A method of recycling a waste plastics material, comprising:
   (i) introducing into a reactor a waste plastics supply and a modified zeolite catalyst;
   (ii) optionally introducing a solvent into a reactor;
   (iii) optionally purging the reactor with an inert gas;
   (iv) introducing an inert gas into the reactor, or alternatively introducing hydrogen gas into the reactor, wherein the pressure of inert gas or hydrogen gas is between 1 atm and 100 atm;
   (v) optionally providing a mixing means for mixing the waste plastics supply and the catalyst;
   (vi) heating the reactor to between 150°C and 500°C for between 1 minute and 4 hours.
14. A method as described in clause 13, wherein a solvent is employed and the solvent is a C₅-C₁₂ alkane solvent.
15. A method as described in clause 13 or 14, wherein the waste plastics supply is a mixture of different plastics.
16. A method as described in any of clauses 13, 14 or 15, wherein the waste plastics supply comprises a single waste plastics material.
17. A method as described in any of clauses 13 to 16, wherein the waste plastics supply is, or includes as one component, a plastic selected from the group comprising: polyethylene (PE), polypropylene (PP), polystyrene (PS), polyethylene terephthalate (PET), polychloroprene, nylon, polyvinyl chloride (PVC), polyacrylonitrile (PAN), and polyurethane (PU).
18. A method as described in any of clauses 13 to 15, wherein the waste plastics supply includes a halogenated polyvinyl and/or PET as one component.
19. A method as described in any of clauses 13 to 15, 17 or 18, wherein the waste plastics comprises 2 or 3 different plastics.

The present invention is illustrated by way of the following examples. These examples are not intended to be limiting to the scope of the present invention.

### Example 1 - Preparation of reactor (general)

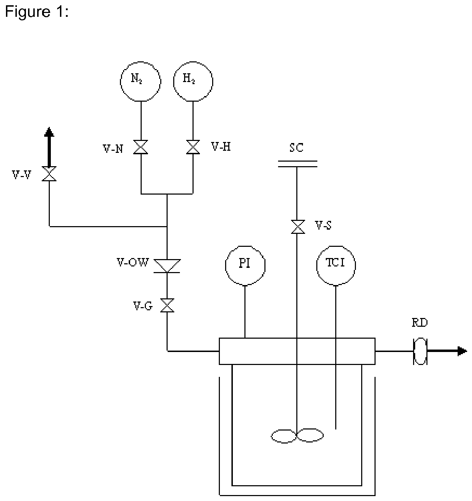

This example illustrates how the reactor is prepared prior to commencing the reaction. The example makes reference to figure 1.

The waste plastics supply, catalyst and solvent (if necessary) are loaded into a clean autoclave. A gasket with copper greased applied is then put in place. The lid of the autoclave is then tightened with bolts in order to prevent leaks to a torque of about 70 Nm. All the valves at this stage are closed.

The reactor is then purged with N₂ to remove all of the air in the system. To purge the system, the valve V-N is fully opened and the valve V-G is opened in a controlled manner to gradually increase the pressure (as indicated by the gauge). When the pressure is above 200 psig, V-G and V-N are closed and the content of the autoclave is vented in a controlled manner by opening V-V and V-G. This operation is repeated approximately three times to make sure the reactor has no air.

If the experiment is going to be under N₂, the reactor is pressurised to the desired pressure, P₀, with N₂.

If H₂ is to be used, it is advisable to purge the system again with N₂ before pressurising to the desired pressure, P₀, with H₂.

The amount of gas that is initially in the reactor is measured by connecting a gas meter to the sampling exit, SC, and opening the valve V-S to circulate the gas from the autoclave through the gas meter. When gas flow stops, V-S is closed and the reactor pressurised again up to P₀. The reactor is then closed and the experiment ready to start.

### Example 2 - The reaction

This example illustrates the procedure for performing the hydrocracking or pyrolysis reaction.

To start the reaction, firstly the stirrer is turned on. Then, the desired reaction temperature is set by using the temperature controller. In order to avoid the temperature overshooting, it is advisable not to set the temperature directly to the final value, but to increase the temperature in stages. When the final temperature is reached, it is held isothermal for the desired reaction time. After the reaction, the heater is switched off. During the experiment, it is important to monitor and record any changes associated with the stirrer, heater and pressure with time.

The reactor is then cooled by using compressed air and at a temperature where leaks are likely to occur, the gas contents of the reactor are sampled into a 1L bomb placed in an ice-bath. This is done by connecting the sampling bomb to the sampling exit SC. The bomb is connected to a gas meter and the gas is circulated. During this time gas sampling bags can be used to collect samples for analysis. When gas sampling is complete, when no more gas is flowing, the gas meter is disconnected and the bomb sealed.

The remaining gas in the reactor is also measured with the gas meter and samples taken for analysis. The reactor is then turned upside down to collect the liquid and solid contents which can then be weighed and collected for analysis.

This scheme illustrates an example flow diagram for both preparing the reactor and performing the reaction according to examples 1 and 2.

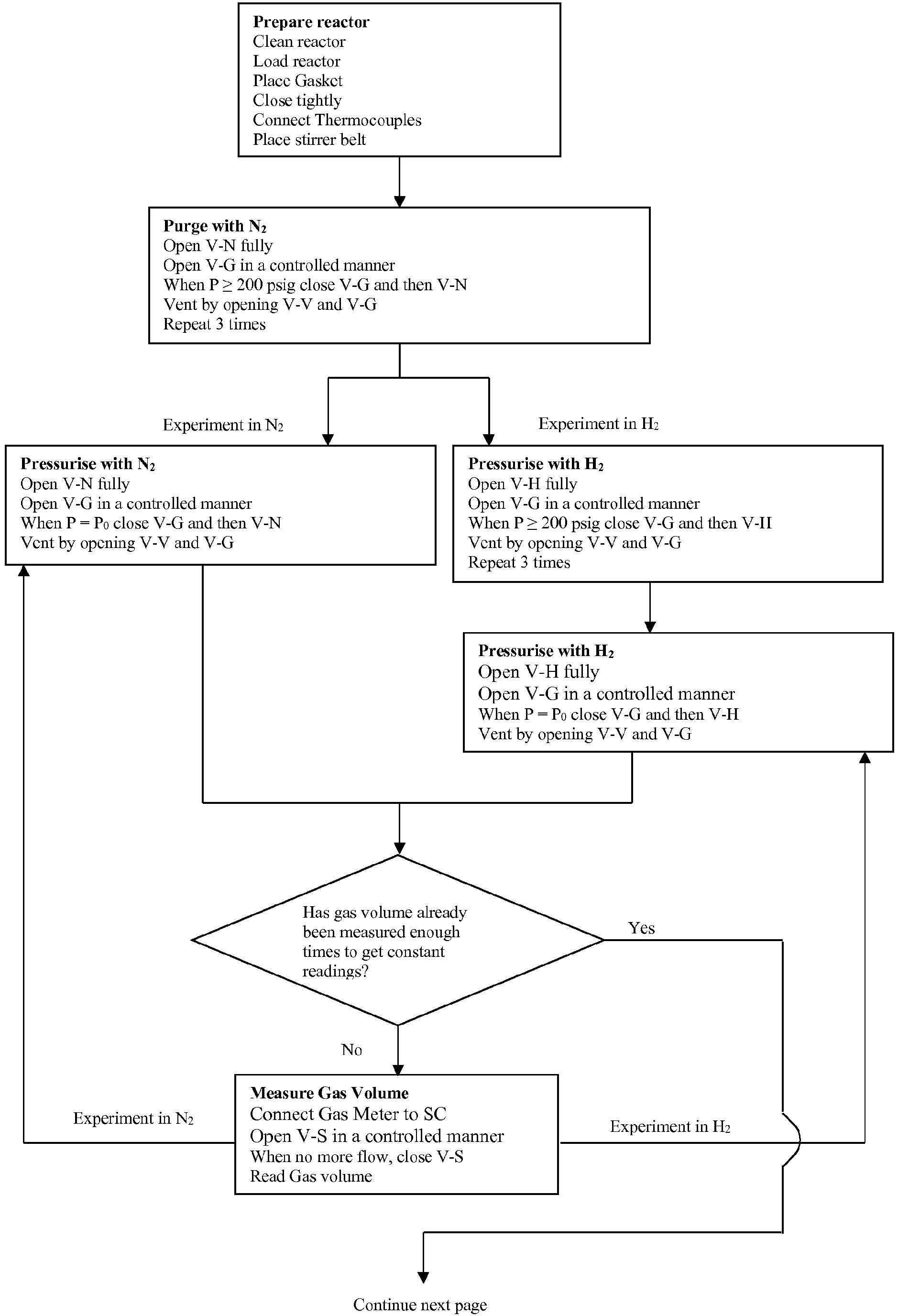

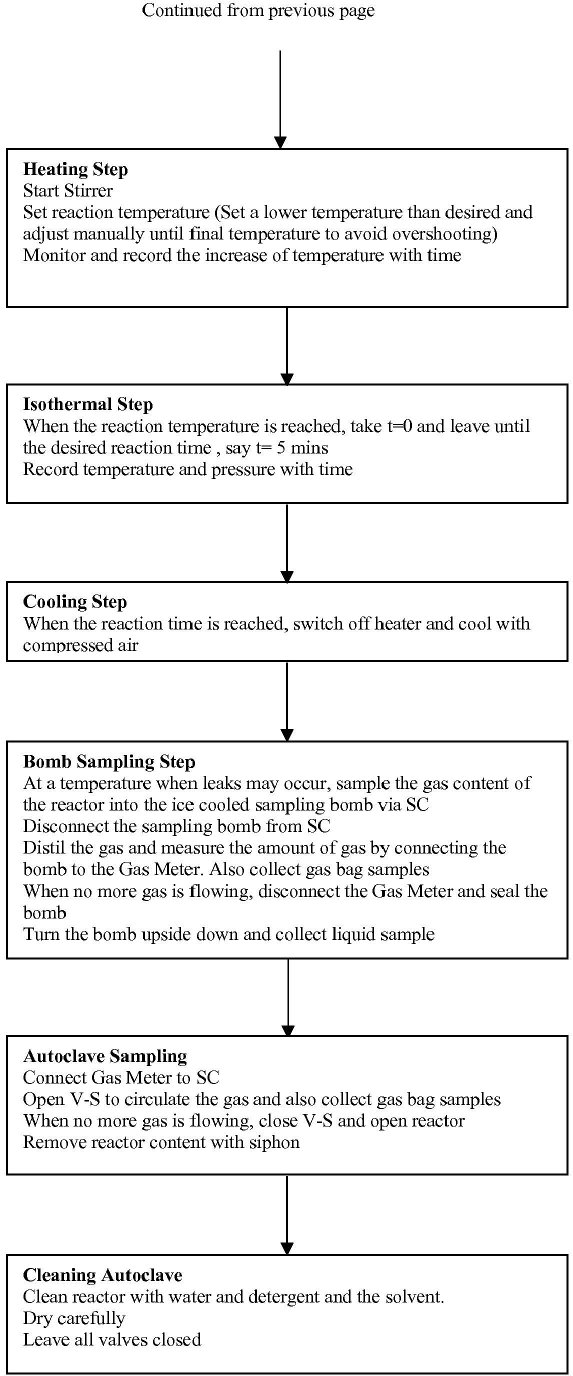

### Example 3 - preparation of the bare zeolite catalyst (excluding metal)

This example illustrates a procedure for the manufacture of three zeolite catalysts of the present invention. The Na₂O contents of the catalysts and intermediates are recited. The initial zeolite catalyst having a Na₂O content of 2.5% is commercially available.

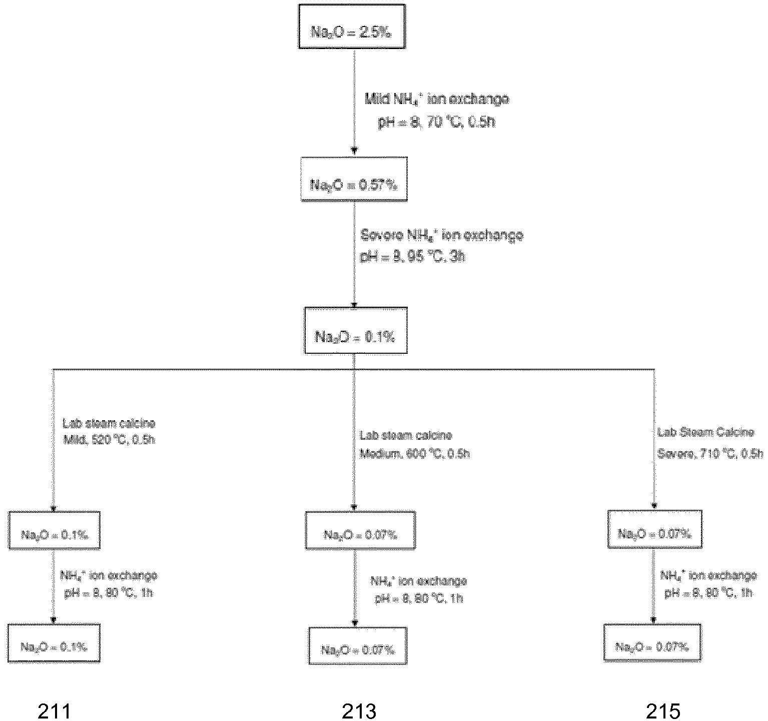

### Example 4 - loading of transition metal by ion exchange

This example illustrates the procedure for the loading of the transition metal to the zeolites produced from example 3.

The catalysts were loaded with Pt by ion exchange with an aqueous solution of Pt(NH₃)₄Cl₂ salt purchased from Sigma-Aldrich. About 10 g of zeolite was mixed with 1000 mL of 0.001 M Pt solution and the slurry was then stirred at room temperature for 24 h. The concentration of the solution was calculated from the required level of loading, assuming complete uptake of platinum by the zeolite and a ratio of 100 mL of solution per gram of zeolite exchanged. The Pt loaded zeolite was then filtered off and washed with deionised water to remove chloride ions. About 6 L of deionised water was used for each 10 g of catalyst prepared. The filtrate (supernatant solution) was retained and analysed for Pt to ensure total ion exchange of the Pt. The catalyst was then dried overnight at 110°C.

Elemental analysis of the supernatant solutions of all ion exchanges was performed by a Fisons Horizon ICP-OES (Inductively Coupled Plasma-Optical Emission Spectrometer). This analysis revealed no traces of Pt left in any supernatant, confirming the hypothesis of complete uptake.

The Pt ion exchange performed can be represented non-stoichiometrically as shown in diagram:

NH₄⁺ (zeolite) + Pt(NH₃)₄²⁺ (aq) → Pt(NH₃)₄ (zeolite) + NH₄⁺ (aq)

The ion exchange intended is not complete and some ammonium is left to provide the Brønsted acid site after calcination.

The catalysts prepared and tested are summarised in table 1. The loadings are calculated with the hypothesis (confirmed) of complete Pt uptake.

**Table 1. Example of platinum loadings (in wt %) of catalysts used**

| | 0% Pt | 0.5% Pt | 1% Pt |
|---|---|---|---|
| USY-1 | - | - | + |
| USY-2 | + | + | + |
| USY-3 | - | - | + |
| MOR | - | - | + |
| ASA | + | - | + |

In the above table, the character '+' indicates that the catalyst is active. The character '-' indicates that the catalyst is not active.

### Example 5 - catalyst activation procedure

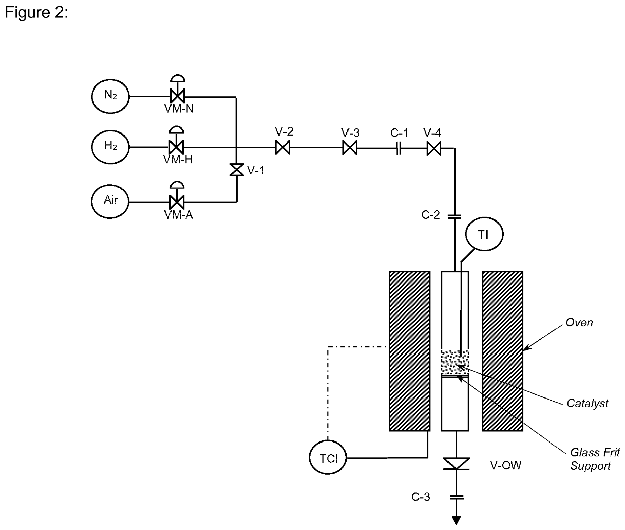

This example illustrates the procedure for the activation of the catalysts from example 4. Figure 2 is relevant to this example.

The catalysts with the tetra-ammine Pt complex adsorbed require activation to obtain the Pt metal (oxidation 0). The procedure has two steps: firstly calcination with O₂ or air (to obtain the oxidized form of the metal Pt²⁺ and the H form of the zeolite) and secondly, reduction with H₂ (to obtain the reduced Pt metal form).

It has been shown in the literature that the heating rate of the first step has to be slow in order to avoid sintering and the procedure used is shown in table 2.

**Table 2: Calcination and reduction program for Pt loaded materials**

| **Sample Weight (g)** | | 1.8 | | |
|---|---|---|---|---|
| **Gas** | **Flow (mL/min)** | **Temp (°C)** | **Time/Ramp** | **Pressure** |
| **Air** | 100 mL/min | 40-450 | 1 °C/min | Atm |
| **Air** | 100 mL/min | 450 | 240 min | Atm |
| **Air** | 100 mL/min | 450-40 | 2 °C/min | Atm |
| **N₂** | 50 mL/min | 40 | 15 min | Atm |
| **H₂** | 100 mL/min | 40-450 | 2 °C/min | Atm |
| **H₂** | 100 mL/min | 450 | 240 min | Atm |
| **H₂** | 100 mL/min | 450-40 | 2 °C/min | Atm |

Activation of these types of catalysts is usually done in-situ. Alternatively, the activation may be performed outside the reactor. A suitable apparatus for activating the catalysts outside the reactor is given in figure 2.

The activation of the Pt loaded catalyst may be carried out using the apparatus of figure 2 by following the flowchart provided in the following scheme. The valves may be calibrated by measuring flows with a bubble-meter, and so setting the positions for the desired flows.

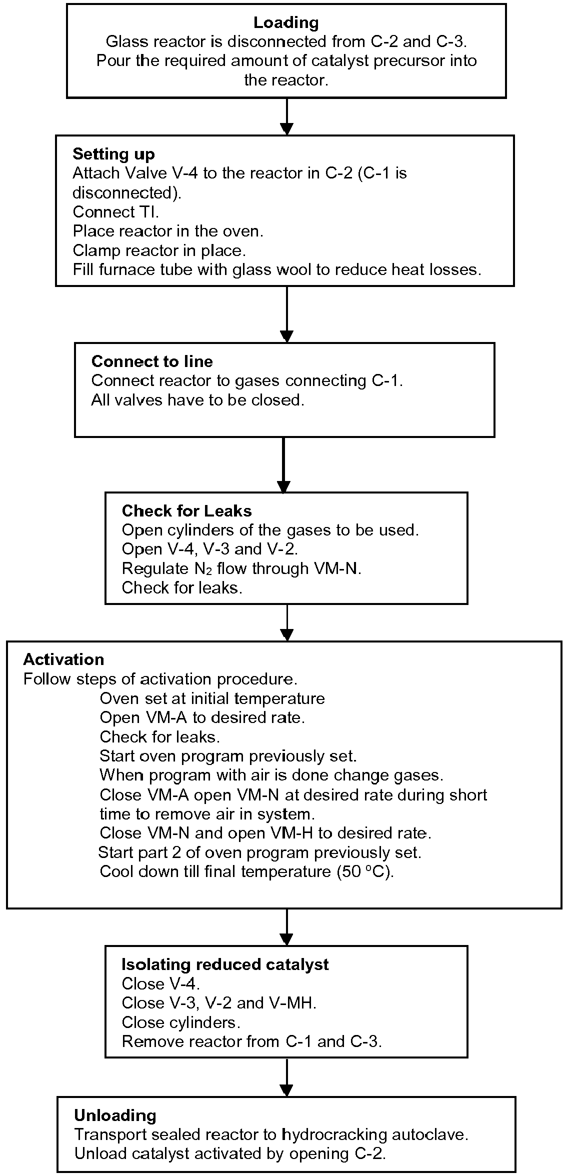

### Example 6 - Results

This example illustrates the results for the catalytic hydrocracking of a number of compounds. The catalyst numbers refer to those recited in example 3 above.

| **Compound** | **Catalyst** | **T/°C** | **P/psi** | **Typical Conversion/%** |
|---|---|---|---|---|
| n-Heptane | 215 | 270 | 800 | 0.5 |
| n-Heptane | 215 | 310 | 800 | 5.8 |
| n-Heptane | 215 | 350 | 800 | 83.8 |
| n-Heptane | 215 | 380 | 800 | 96.1 |
| Squalane | 211 | 350 | 800 | 100.0 |
| PE | 215 | 310 | 800 | 99.5 |
| PP | 215 | 310 | 800 | 99.8 |
| PS | 215 | 310 | 800 | 100.0 |
| PE (40%), PP (40%), PS (20%) | 215 | 310 | 800 | 99.4 |
| PE (40%), PP (40%), PS (20%) | 211 | 310 | 800 | 99.2 |
| PE (40%), PP (40%), PS (10%), PET (10%) | 211 | 410 | 800 | 100.4 |
| PE (35%), PP (30%), PS (10%), PET (25%) | 211 | 400 | 800 | 99.8 |
| PE (40%), PP (40%), PS (15%), PVC (5%) | 211 | 350 | 800 | 99.4 |

### Example 7 - Typical Product Distribution

This example illustrates the product distribution for the catalytic hydrocracking of a number of compounds. The catalyst numbers refer to those recited in example 3 above.

| | | | **Distribution of lower alkyl compounds (the number corresponds to number of carbon atoms in alkyl compound)** | | | | | | | | |
|---|---|---|---|---|---|---|---|---|---|---|---|
| **Compound** | **Catalyst** | **T/°C** | **C1** | **C2** | **C3** | **C4** | **C5** | **C6** | **C7** | **C8** | **C9+** |
| n-Heptane | 215 | 270 | 0.0 | 0.0 | 0.0 | 0.0 | 0.0 | 0.5 | 99.5 | 0.0 | 0.0 |
| n-Heptane | 215 | 310 | 0.0 | 0.0 | 1.8 | 1.8 | 1.8 | 0.5 | 95.5 | 0.0 | 0.0 |
| n-Heptane | 215 | 350 | 0.1 | 0.1 | 31.8 | 49.6 | 1.4 | 1.0 | 16.2 | 0.0 | 0.0 |
| n-Heptane | 215 | 380 | 0.1 | 0.2 | 35.1 | 58.3 | 1.6 | 0.8 | 4.0 | 0.0 | 0.0 |
| Squalane | 211 | 350 | 0.1 | 0.3 | 8.7 | 16.5 | 28.5 | 41.1 | 2.1 | 1.9 | 1.0 |
| PE | 215 | 310 | 0.0 | 0.2 | 11.2 | 32.0 | 27.5 | 17.5 | 7.9 | 2.5 | 0.7 |
| PP | 215 | 310 | 0.1 | 0.1 | 7.7 | 23.6 | 15.2 | 33.4 | 13.1 | 5.7 | 1.1 |
| PS | 215 | 310 | 0.0 | 0.1 | 29.0 | 35.5 | 3.7 | 5.1 | 15.9 | 3.8 | 7.0 |
| PE (40%), PP (40%), PS (20%) | 215 | 310 | 0.1 | 0.2 | 5.5 | 12.6 | 10.2 | 31.0 | 25.3 | 10.0 | 4.6 |
| PE (40%), PP (40%), PS (20%) | 211 | 310 | 0.0 | 0.1 | 2.6 | 7.3 | 8.5 | 30.6 | 25.9 | 15.0 | 9.3 |
| PE (40%), PP (40%), PS (10%), PET (10%) | 211 | 410 | 0.4 | 1.1 | 7.9 | 7.7 | 6.9 | 30.9 | 21.4 | 10.4 | 13.8 |
| PE (35%), PP (30%), PS (10%), PET (25%) | 211 | 400 | 0.4 | 1.2 | 5.8 | 5.6 | 5.1 | 31.4 | 18.7 | 13.3 | 18.3 |
| PE (40%), PP (40%), PS (15%), PVC (5%) | 211 | 350 | 0.1 | 0.5 | 6.8 | 8.5 | 6.9 | 29.0 | 25.5 | 12.9 | 9.2 |

## Claims

1. A method of recycling a waste plastics material, comprising:
a. introducing into a reactor a waste plastics supply and a modified zeolite catalyst;
b. optionally introducing a solvent into a reactor;
c. optionally purging the reactor with an inert gas;
d. introducing an inert gas into the reactor, or alternatively introducing hydrogen gas into the reactor, wherein the pressure of inert gas or hydrogen gas is between 1 atm and 100 atm;
e. optionally providing a mixing means for mixing the waste plastics supply and the catalyst;
f. heating the reactor to between 150°C and 500°C.

2. A method as claimed in claim 1, wherein a solvent is employed and the solvent is a C₅-C₁₂ alkane solvent.

3. A method as claimed in claim 1 or 2, wherein the waste plastics supply is a mixture of different plastics.

4. A method as claimed in claim 1, 2 or 3, wherein the waste plastics supply comprises a single waste plastics material.

5. A method as claimed in any of claims 1 to 4, wherein the waste plastics supply is, or
includes as one component, a plastic selected from the group comprising: polyethylene (PE), polypropylene (PP), polystyrene (PS), polyethylene terephthalate (PET), polychloroprene, nylon, polyvinyl chloride (PVC), polyacrylonitrile (PAN), and polyurethane (PU).

6. A method as claimed in any of claims 1 to 5, wherein the waste plastics supply includes a halogenated polyvinyl and/or PET as one component.
